# EUROPÄISCHE PATENTSCHRIFT

(11) **EP 3 608 175 B1**
(45) Veröffentlichungstag und Bekanntmachung des Hinweises auf die Patenterteilung: **21.07.2021**
(21) Anmeldenummer: 19189795.8
(22) Anmeldetag: 02.08.2019
(51) Int. Cl.: B60R 13/02

(54) **VERKLEIDUNGSTEIL FÜR EINEN FAHRZEUG-INNENRAUM**
VEHICLE INTERIOR TRIM PANEL
ÉLÉMENT D'HABILLAGE POUR UN HABITACLE DE VÉHICULE

(30) Priorität: 07.08.2018 DE 102018213224
(43) Veröffentlichungstag der Anmeldung: 12.02.2020
(73) Patentinhaber: Audi AG, 85045 Ingolstadt (DE)
(72) Erfinder: Wunderlich, Matthias, 85053 Ingolstadt (DE); Bhattacharya, Arya, 74235 Erlenbach (DE); Luijkx, Richard, 85055 Ingolstadt (DE)

(56) Entgegenhaltungen:
- EP-A2- 0 715 970
- DE-A1-102012 110 153
- DE-A1-102015 003 448
- DE-A1-102016 107 789

## Beschreibung

Die Erfindung betrifft ein Verkleidungsteil für einen Fahrzeug-Innenraum nach dem Oberbegriff des Anspruches 1 sowie ein Verfahren zur Herstellung eines Verkleidungsteils nach dem Anspruch 5.

Eine Zierleiste mit einem sichtseitigen Holzfurnier kann beispielhaft in einem potentiellen Kopfanprallbereich in der Instrumententafel verbaut sein. In diesem Fall sind gesteigerte Anforderungen an die Crashsicherheit der Zierleiste gestellt. Einerseits muss die Zierleiste bei einer aufprallbedingten Biegebeanspruchung ausreichend nachgiebig gestaltet sein. Andererseits muss bei einem aufprallbedingten Bauteilbruch der Zierleiste gewährleistet sein, dass Bruchsegmente der Zierleiste keine scharfen Kanten bilden oder in den Fahrzeug-Innenraum hinein absplittern.

Ein beispielhaftes Verkleidungsteil weist eine sichtseitige, bauteilspröde Deckschicht, etwa ein Holzfurnier oder eine Carbonschicht, auf, die bei Crashbelastung bruchanfällig ist. Die Deckschicht ist mit einer Kunststoffträgerschicht hinterspritzt. Das Verkleidungsteil wird im Crashfall, das heißt zum Beispiel bei einem Kopfaufprall des Fahrzeuginsassen, auf Durchbiegung belastet.

Im Stand der Technik weist ein solches Verkleidungsteil einen Schichtaufbau, bestehend aus einer Vielzahl von Furnierschichten mit darin integrierter Metalllage (zum Beispiel aus Aluminium) und eine Kunststoffträgerschicht auf. Die Vielzahl von Furnierschichten reduziert den Bauteilverzug. Die integrierte Metalllage bewirkt im Crashfall eine deutliche Erhöhung der Bauteilsteifigkeit. Der aus dem Stand der Technik bekannt Schichtaufbau ist insofern nachteilig, als die Mehrzahl von Furnierschichten mitsamt der Aluminiumlage zu einer großen Bauteildicke führt. Dadurch können sich bei beengten Raumverhältnissen Packageprobleme ergeben. Zudem ist die Integration einer Metalllage in den Mehrschichtaufbau kostenintensiv.

Aus der DE 10 2008 009 766 A1 ist eine Materialschicht mit Haftvermittlern und ein Verfahren zur Herstellung einer solchen Materialschicht bekannt. Aus der FR 2 991 904 A1 und aus der FR 30 366 70 A sind weitere Verkleidungsteile für den Fahrzeug-Innenraum bekannt.

Aus der DE 10 2012 110 153 A1 sind ein gattungsgemäßes Formteil und ein Verfahren zur Herstellung eines solchen Formteils bekannt. Die EP 0 715 970 A3 offenbart ein Kaschierverfahren zur Herstellung dekorativer Oberflächen.

Die Aufgabe der Erfindung besteht darin, ein Verkleidungsteil für einen Fahrzeug-Innenraum bereitzustellen, das im Vergleich zum Stand der Technik bauraumsparend ausführbar ist und mit reduziertem Kostenaufwand herstellbar ist.

Die Aufgabe ist durch die Merkmale des Anspruches 1 oder 5 gelöst. Bevorzugte Weiterbildungen der Erfindung sind in den Unteransprüchen offenbart.

Gemäß dem Anspruch 1 ist zur Steigerung der Bruchfestigkeit/Biegefestigkeit des Verkleidungsteils im Materialaufbau (Schichtaufbau) des Verkleidungsteils zumindest eine Gewebeschicht integriert. Die Gewebeschicht ist aus einem Textilmaterial bzw. einem textilen Faserhalbzeug hergestellt, das im Crashfall die Bauteilsteifigkeit bzw. die Biegefestigkeit des Verkleidungsteils signifikant erhöht, und zwar auch unter Weglassung der aus dem obigen Stand der Technik bekannten zusätzlichen Metalllage.

In einer technischen Umsetzung kann das Verkleidungsteil als eine Dünnschicht-Applikation realisiert sein, bei dem der Schichtaufbau des Verkleidungsteils nicht aus einer größeren Vielzahl von Furnierlagen aufgebaut ist, sondern vielmehr lediglich genau dreilagig aufgebaut ist, und zwar mit der sichtseitigen Deckschicht (insbesondere ein Holzfurnier), der Kunststoffträgerschicht und der Gewebeschicht. Auf diese Weise ergibt sich eine insgesamt reduzierte Bauteildicke des Verkleidungsteils, wodurch das Verkleidungsteil auch bei beengten Raumverhältnissen eingesetzt werden kann.

Die textile Gewebeschicht weist bevorzugt ein Kett- und Schussfadensystem auf, in dem sich die Kettfäden und die Schussfäden an Knotenpunkten überkreuzen. Zudem können in der Gewebeschicht Verstärkungsfasern integriert sein, etwa aus Glas, Carbon, Aramid, Basalt oder dergleichen.

In einer nicht von der Erfindung umfassten Vergleichsform kann die textile Gewebeschicht im Schichtaufbau zwischen der Deckschicht und der Kunststoffträgerschicht angeordnet sein. Bei der Herstellung des Verkleidungsteils kann somit die Gewebeschicht zusammen mit der Deckschicht in eine Werkzeugkavität eines Spritzgießwerkzeugs eingelegt werden. Die Gewebeschicht kann hierbei ein trockenes, das heißt noch mit Kunststoff vorimprägniertes bzw. durchtränktes Gewebe-Halbzeug sein. Anschließend kann in einem Spritzgießvorgang die Deckschicht mitsamt dem Gewebe-Halbzeug mit dem Kunststoffmaterial der Kunststoffträgerschicht hinterspritzt werden. Die textile Gewebeschicht ist in diesem Fall unmittelbar im Kunststoffmaterial der Kunststoffträgerschicht eingebettet.

Bei dem obigen Schichtaufbau ist die spröde Deckschicht in unmittelbarer Anlage mit der textilen Gewebeschicht, wodurch sich gegebenenfalls Oberflächenunebenheiten in der Gewebeschicht als optisch nachteilige Faserabzeichnungen auf der Sichtseite des fertig gestellten Verkleidungsteils wiederfinden können. Derartige Oberflächenunebenheiten ergeben sich an den Knotenpunkten des Kett- und Schussfadensystems, an denen sich die Kett- und Schussfäden überkreuzen.

Zur Steigerung der Oberflächengüte des Verkleidungsteils ist es erfindungsgemäß vorgesehen, dass die Deckschicht ohne Zwischenlage der Gewebeschicht direkt mit dem Kunststoffmaterial der Kunststoffträgerschicht hinterspritzt ist. In diesem Fall ist die textile Gewebeschicht auf der, der Deckschicht abgewandten Rückseite des Verkleidungsteils kraftübertragend an der Kunststoffträgerschicht befestigt. Die Befestigung der Gewebeschicht an der Verkleidungsteil-Rückseite erfolgt durch Verschweißen oder durch Heißstemmen. Erfindungsgemäß sind auf der Verkleidungsteil-Rückseite an der Kunststoffträgerschicht Kunststoffstifte angeformt, die jeweils Ausnehmungen der Gewebeschicht durchragen und einen mittels Heißstemmen ausgeweiteten Elementkopf aufweisen. Dieser hintergreift den Öffnungsrandbereich der jeweiligen Gewebeschicht-Ausnehmung, um die Gewebeschicht kraftübertragend mit der Kunststoffträgerschicht zu verbinden.

Unter Anwendung des oben erwähnten Dreilagenaufbaus, bestehend aus der Deckschicht, der Kunststoffträgerschicht und der Gewebeschicht, kann das Verkleidungsteil mit äußerst geringer Bauteildicke hergestellt werden. In einer ersten Ausführungsvariante kann sich der oben erwähnte dickenreduzierte Schichtaufbau komplett über das gesamte Verkleidungsteil erstrecken. Alternativ dazu kann das Verkleidungsteil zumindest einen Abschnitt reduzierter Bauteildicke aufweisen, der mit dem obigen dickenreduzierten Schichtaufbau realisiert ist.

Nachfolgend sind Ausführungsbeispiele anhand der beigefügten Figuren beschrieben.

Es zeigen:
- Figur 1: in einer grob schematischen Seitenansicht eine angedeutete Instrumententafel mit darin verbauter Zierleiste;
- Figur 2: in einer nicht erfindungsgemäßen Schnittdarstellung einen Schichtaufbau der Zierleiste;
- Figur 3: eine Explosionsansicht bestehend aus einem sichtseitigen Holzfurnier und einer textilen Gewebeschicht;
- Figur 4: in einer erfindungsgemäßen Ansicht entsprechend der Figur 2; und
- Figur 5: in einer perspektivischen Darstellung eine Zierleiste gemäß einem nicht erfindungsgemäßen Ausführungsbeispiel.

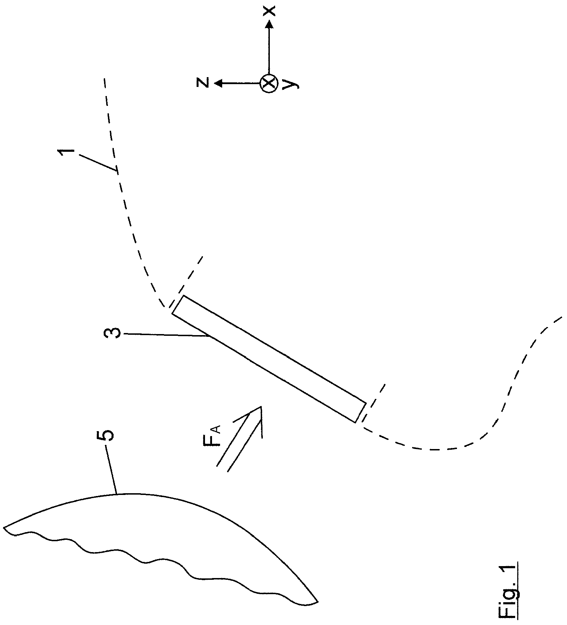

In der Figur 1 ist in einer grob schematischen Darstellung die Kontur 1 einer Instrumententafel eines Kraftfahrzeugs angedeutet, in der eine Zierleiste 3 verbaut ist. Die Zierleiste 3 erstreckt sich beispielhaft leistenförmig in der Fahrzeugquerrichtung y im Beifahrerbereich der Instrumententafel 1. Wie aus der Figur 1 weiter hervorgeht, befindet sich die Instrumententafel 1 in einer Versuchseinrichtung mit einem Kopfimpaktor 5, mittels dem eine Kopfaufschlagprüfung durchgeführt wird, bei dem ein crashbedingter Kopfaufprall auf die Zierleiste 3 der Instrumententafel 1 simuliert wird.

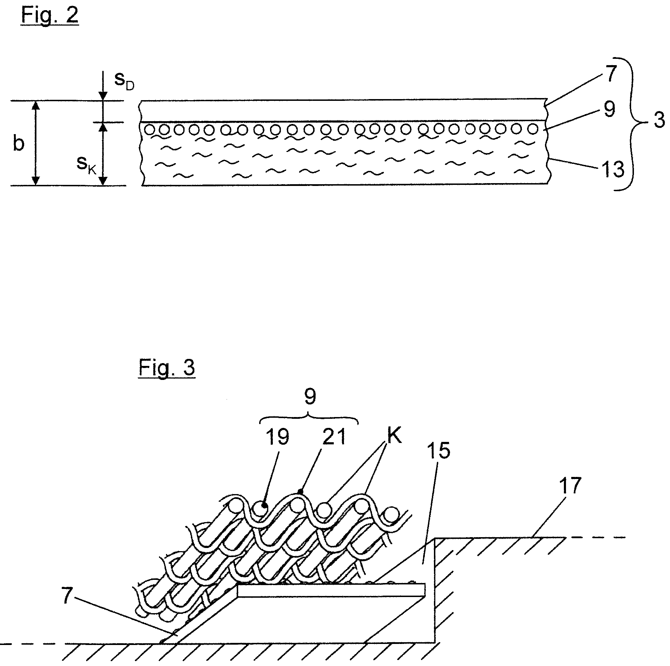

In der Figur 2 ist ein Schichtaufbau der Zierleiste 3 angedeutet. Demzufolge weist die Zierleiste 3 auf ihrer Sichtseite als Deckschicht 7 ein sprödes Holzfurnier auf, das bei einem crashbedingten Kopfaufprall bruchanfällig ist. Zur Steigerung der Bruchfestigkeit des Holzfurniers 7 weist die Zierleiste 3 den in der Figur 2 angedeuteten Schichtaufbau auf. Demzufolge ist die Zierleiste 3 genau dreilagig aufgebaut, und zwar mit der bereits erwähnten sichtseitigen Deckschicht 7 aus einem Holzfurnier, einer textilen Gewebeschicht 9 sowie einer Kunststoffträgerschicht 13. In der Figur 2 ist die textile Gewebeschicht 9 zwischen der sichtseitigen Deckschicht 7 und der Kunststoffträgerschicht 13 angeordnet. Die Deckschicht 7 aus Holzfurnier kann beispielhaft eine Schichtdicke s_{D} von 0,35mm aufweisen, während eine Schichtdicke s_{K} der Kunststoffträgerschicht 13 zum Beispiel bei 3,5mm liegt. Daraus ergibt sich eine Bauteildicke b in der Größenordnung von 4mm.

Zur Herstellung der Zierleiste 3 wird in der Figur 3 die Deckschicht 7 (das heißt das Holzfurnier) zusammen mit der Gewebeschicht 9 vorgeformt und in eine Werkzeugkavität 15 eines Spritzgießwerkzeugs 17 eingelegt. Anschließend wird die Werkzeugkavität 15 geschlossen und es erfolgt ein Spritzgießprozess, bei dem die Deckschicht 7 unter Druck und Wärme mit dem Kunststoffmaterial der Kunststoffträgerschicht 13 hinterspritzt wird. Auf diese Weise wird die Gewebeschicht 9 unmittelbar im Kunststoffmaterial der Kunststoffträgerschicht 13 eingebettet.

Wie aus der Figur 3 weiter hervorgeht, weist die textile Gewebeschicht 9 ein Kett- und Schussfadensystem mit Kettfäden 19 und Schussfäden 21 auf. Die Kett- und Schussfäden 19, 21 können beispielhaft als Verstärkungsfasern aus Glas, Carbon, Aramid, Basalt oder dergleichen realisiert sein. Gemäß der Figur 3 überkreuzen sich die Kett- und Schussfäden 19 an Knotenpunkten K, wodurch sich Oberflächenunebenheiten mit Erhöhungen/Vertiefungen ergeben. Diese können auf der Sichtseite des fertig gestellten Verkleidungsteils 3 optisch nachteilige Faserabzeichnungen bilden.

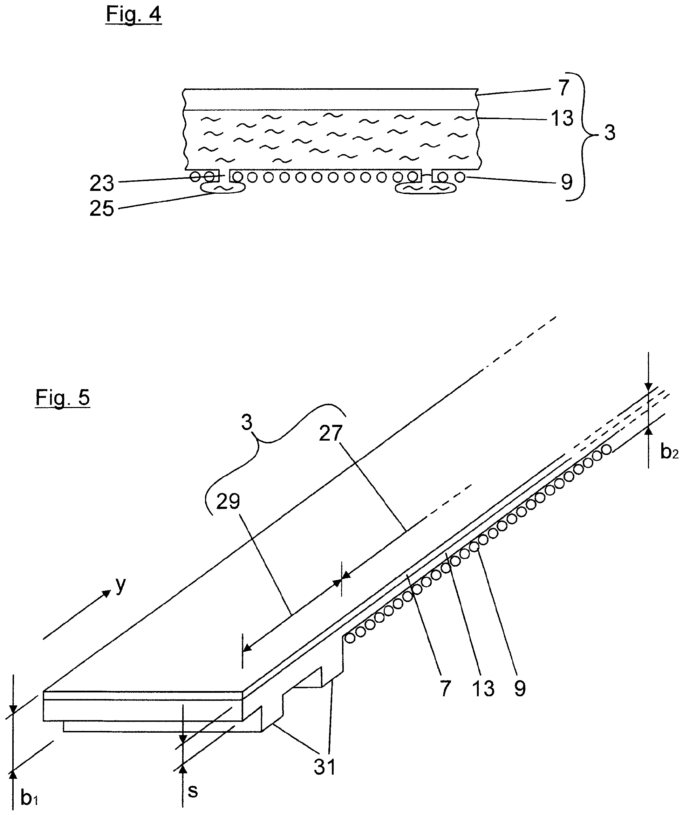

Erfindungsgemäß ist die Deckschicht 7 ohne Zwischenlage der Gewebeschicht 9 direkt mit dem Kunststoffmaterial der Kunststoffträgerschicht 13 hinterspritzt wie es in der Figur 4 gezeigt wird, wobei der Deckschicht 7 abge-wandten Verkleidungsteil-Rückseite kraftübertragend an der Kunststoffträgerschicht 13 befestigt ist. Zur Befestigung an der Kunststoffträgerschicht 13 sind an der Kunststoffträgerschicht 13 Kunststoffstifte 23 angeformt, die korrespondierende Ausnehmungen der Gewebeschicht 9 durchragen und einen, mittels Heißstemmen ausgeweiteten Elementkopf 25 aufweisen. Die Kunststoffstifte 23 hintergreifen mit ihren ausgeweiteten Elementköpfen 25 den Öffnungsrandbereich der Gewebeschicht-Ausnehmungen, wodurch die Gewebeschicht 9 kraftübertragend an der Kunststoffträgerschicht 13 angebunden ist.

In der Figur 5 ist in einem weiteren Ausführungsbeispiel die Zierleiste 3 in perspektivischer Alleinstellung gezeigt. Demzufolge weist die Zierleiste 3 in einer Erstreckungsrichtung y einen bauraumintensiven Abschnitt 29 mit erhöhter Bauteildicke b₁ und daran anschließend einen bauraumreduzierten Flächenabschnitt 27 mit geringerer Bauteildicke b₁ auf. Der bauraumreduzierte Verkleidungsteil-Abschnitt 27 weist den dickenreduzierten Schichtaufbau bestehend aus der Deckschicht (Holzfurnier) 7, der Kunststoffträgerschicht 13 und einem Gewebeschicht-Zuschnitt 9 auf. Auf diese Weise kann trotz reduzierter Bauteildicke b₂ im bauraumreduzierten Verkleidungsteil-Abschnitt 27 eine ausreichend große Biegesteifigkeit bereitgestellt werden. Im Gegensatz dazu ist der bauraumintensive Verkleidungsteil-Abschnitt 29 ohne textile Gewebelage 9 realisiert. Anstelle dessen ist im bauraumintensiven Verkleidungsteil-Abschnitt 29 die Gewebeschicht 9 wegegelassen. Anstelle dessen wird im bauraumintensiven Verkleidungsteil-Abschnitt 29 die Bruchfestigkeit (Biegefestigkeit) dadurch gesteigert, dass die Schichtdicke s der Kunststoffträgerschicht 13 unter Bildung von Versteifungsrippen 31 erhöht worden ist.

## Patentansprüche

1. Verkleidungsteil für einen Fahrzeug-Innenraum mit einer sichtseitigen, bei Crashbelastung bruchanfälligen Deckschicht (7), die mit einer Kunststoffträgerschicht (13) hinterspritzt ist, wobei das Verkleidungsteil (3) im Crashfall auf Durchbiegung bis zum Bauteilbruch belastet ist, **dadurch gekennzeichnet, dass** zur Steigerung der Bruchfestigkeit im Crashfall im Schichtaufbau des Verkleidungsteils (3) eine Gewebeschicht (9) aus einem Textilmaterial integriert ist, dass die Deckschicht (7) ohne Zwischenlage der Gewebeschicht (9) direkt mit dem Kunststoffmaterial der Kunststoffträgerschicht (13) hinterspritzt ist, dass die Gewebeschicht (9) auf der, der Deckschicht (7) abgewandten Rückseite des Verkleidungsteils (3) kraftübertragend an der Kunststoffträgerschicht (13) befestigt ist, dass die Befestigung der Gewebeschicht (9) durch Verschweißen oder durch Heißstemmen erfolgt, und dass auf der Rückseite des Verkleidungsteils (3) an der Kunststoffträgerschicht (13) zumindest ein Kunststoffstift (23) angeformt ist, der eine Ausnehmung der Gewebeschicht (9) durchragt und einen, durch Heißstemmen ausgeweiteten Elementkopf (25) aufweist, der den Öffnungsrandbereich der Gewebeschicht-Ausnehmung hintergreift.

2. Verkleidungsteil nach Anspruch 1, **dadurch gekennzeichnet, dass** der Schichtaufbau des Verkleidungsteils (3) genau dreilagig ist, und zwar mit der sichtseitigen Deckschicht (7), der Kunststoffträgerschicht (13) und der Gewebeschicht (9).

3. Verkleidungsteil nach einem der vorhergehenden Ansprüche, **dadurch gekennzeichnet, dass** das Verkleidungsteil (3) zumindest einen bauraumintensiven Abschnitt (29) mit erhöhter Bauteildicke (b₁) und einen bauraumreduzierten Abschnitt (27) mit geringer Bauteildicke (b₂) aufweist, und dass im bauraumreduzierten Verkleidungsteil-Abschnitt (27) zur Steigerung der Bruchfestigkeit die Gewebeschicht (9) integriert ist, und/oder dass im bauraumintensiven Verkleidungsteil-Abschnitt (29) die Gewebeschicht (9) weggelassen ist und anstelle dessen zur Steigerung der Bruchfestigkeit die Schichtdicke (s) der Kunststoffträgerschicht (13) erhöht ist, und zwar unter Bildung von Versteifungsrippen (31).

4. Verkleidungsteil nach einem der vorhergehenden Ansprüche, **dadurch gekennzeichnet, dass** die textile Gewebeschicht (9) ein Kett- und Schussfadensystem aufweist, in dem Verstärkungsfasern (19, 21) integriert sind, und zwar aus Glas, Carbon, Aramid oder Basalt.

5. Verfahren zur Herstellung eines Verkleidungsteils für einen Fahrzeug-Innenraum nach einem der vorhergehenden Ansprüche.

## Claims

1. Trim part for a vehicle interior with a visible-side cover layer (7) that is susceptible to breaking under a crash load, which is back moulded with a plastic carrier layer (13), wherein, in the event of a crash, the trim part (3) is subjected to bending until the component breaks, **characterised in that**, in order to increase the breaking strength in the event of a crash, a fabric layer (9) made of a textile material is incorporated in the layer structure of the trim part (3), that the cover layer (7) is directly back moulded with the plastic material of the plastic carrier layer (13) without an intermediate layer of the fabric layer (9), that the fabric layer (9) is fastened to the plastic carrier layer (13), on the rear side of the trim part (3) facing away from the cover layer (7) in a force transmitting manner, that the fastening of the fabric layer (9) takes place through welding or through hot stamping, and that at least one plastic pin (23) is moulded to the plastic carrier layer (13) on the rear side of trim part (3), which protrudes through a recess of the fabric layer (9) and has an element head (25) expanded by hot stamping, which engages behind the opening edge region of the fabric layer recess.

2. Trim part according to claim 1, **characterised in that** the layer structure of the trim part (3) is exactly three-layered, and namely with the visible-side cover layer (7), the plastic carrier layer (13) and the fabric layer (9).

3. Trim part according to any one of the preceding claims, **characterised in that** the trim part (3) has at least one installation-space-intensive section (29) with an increased component thickness (b₁) and one reduced-installation-space section (27) with a smaller component thickness (b₂), and that the fabric layer (9) is incorporated in the reduced-installation-space trim part section (27) in order to increase the breaking strength, and/or that the fabric layer (9) is omitted in the installation-space-intensive trim part section (29) and, instead of this, the layer thickness (s) of the plastic carrier layer (13) is increased in order to increase the breaking strength, and namely by forming stiffening ribs (31).

4. Trim part according to any one of the preceding claims, **characterised in that** the textile fabric layer (9) has a warp and weft thread system, in which reinforcing fibres (19, 21) are incorporated, and namely made of glass, carbon, aramid or basalt.

5. Method for producing a trim part for a vehicle interior according to any one of the preceding claims.

## Revendications

1. Pièce d'habillage pour un habitacle de véhicule, avec une couche de recouvrement (7) visible, susceptible de se rompre sous l'effet d'une charge de collision, qui est réinjectée avec une couche de support en plastique (13), dans laquelle la pièce d'habillage (3) est sollicitée en cas de collision pour une déviation jusqu'à la rupture de composant, **caractérisée en ce que,** pour augmenter la résistance à la rupture en cas de collision, une couche de tissu (9) en un matériau textile est intégrée dans la structure en couches de la pièce d'habillage (3), **en ce que** la couche de recouvrement (7) est directement réinjectée avec la matière plastique de la couche de support en plastique (13) sans couche intermédiaire de la couche de tissu (9), **en ce que** la couche de tissu (9) est fixée de manière à transmettre les forces à la couche de support en plastique (13) sur la face arrière de la pièce d'habillage (3) opposée à la couche de recouvrement (7), **en ce que** la fixation de la couche de tissu (9) est réalisée par soudage ou par matage à chaud et **en ce qu'**au moins une broche en plastique (23) est formée sur la couche de support en plastique (13) sur la face arrière de la pièce d'habillage (3), qui fait saillie à travers un évidement de la couche de tissu (9) et présente une tête d'élément (25) élargie par matage à chaud et entre en prise avec la zone de bord d'ouverture de l'évidement de couche de tissu.

2. Pièce d'habillage selon la revendication 1, **caractérisée en ce que** la structure en couches de la pièce d'habillage (3) est exactement à trois couches, à savoir avec la couche de recouvrement côté visible (7), la couche de support en plastique (13) et la couche de tissu (9).

3. Pièce d'habillage selon l'une quelconque des revendications précédentes, **caractérisée en ce que** la pièce d'habillage (3) présente au moins une section (29) à forte densité de construction avec une épaisseur de composant accrue (b₁) et une section (27) à densité de construction réduite avec une épaisseur de composant réduite (b₂), et **en ce que** la couche de tissu (9) est intégrée dans la section (27) de la pièce d'habillage à densité de construction réduite afin d'augmenter la résistance à la rupture, et/ou **en ce que** la couche de tissu (9) est supprimée dans la section de pièce d'habillage (29) présentant une forte densité de construction et, qu'au lieu de cela, l'épaisseur de couche (s) de la couche de support en plastique (13) est accrue pour augmenter la résistance à la rupture, à savoir avec la formation de nervures de renfort (31).

4. Pièce d'habillage selon l'une quelconque des revendications précédentes, **caractérisée en ce que** la couche de tissu (9) présente un système de fils de chaîne et de trame dans lequel des fibres de renforcement (19, 21) sont intégrées, à savoir en verre, carbone, aramide ou basalte.

5. Procédé de fabrication d'une pièce d'habillage pour un habitacle de véhicule selon l'une quelconque des revendications précédentes.
